(19) Europäisches Patentamt / European Patent Office / Office européen des brevets

(11) **EP 4 703 787 A1**

(12) **EUROPEAN PATENT APPLICATION**

(43) Date of publication:
04.03.2026 Bulletin 2026/10

(21) Application number: 24306416.9

(22) Date of filing: 30.08.2024

(51) International Patent Classification (IPC):
*G02C 7/02* (2006.01)    *G02C 7/10* (2006.01)
*B29D 11/00* (2006.01)

(52) Cooperative Patent Classification (CPC):
**G02C 7/022; B29D 11/00009; G02C 7/104;**
G02C 2202/16; G02C 2202/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
• **NALLOUR RAVEENDRAN, Rajkumar**
**510232 SINGAPORE (SG)**
• **DROBE, Bjorn**
**479251 SINGAPORE (SG)**
• **DING, Xingzhao**
**120425 SINGAPORE (SG)**

• **BHANGALE, Sunil Madhukar**
**689682 SINGAPORE (SG)**
• **YU, Hui**
**122210 SINGAPORE (SG)**
• **YONG, Kian Soon**
**822271 SINGAPORE (SG)**
• **BARANTON, Konogan**
**75012 PARIS (FR)**
• **FERMIGIER, Bruno**
**94700 MAISONS ALFORT (FR)**
• **GACOIN, Eric**
**75020 PARIS (FR)**
• **GUILLOT, Matthieu**
**92130 ISSY LES MOULINEAUX (FR)**

(74) Representative: **Plasseraud IP**
**104 Rue de Richelieu**
**CS92104**
**75080 Paris Cedex 02 (FR)**

(54) **OPTICAL LENS**

(57) A lens element comprising:
a vision zone; and
within at least part of the vision zone, chromatic light-scattering elements defined as elements configured for selective light scattering in at least one predetermined wavelength range,
thereby inducing chromatic contrast reduction across said at least part of the vision zone.

**FIG. 3**

EP 4 703 787 A1

## Description

## Technical Field

This disclosure pertains to the field of ophthalmic optics.

The disclosure more particularly relates to an optical lens.

## Background Art

Current optical lenses primarily focus on correcting refractive errors by focusing light directly onto the retina. Traditional lenses do not account for the chromatic properties of light, which can impact visual performance and eye health. Various approaches have been explored to control myopia progression, including the use of peripheral defocus lenses and microlens arrays. These methods aim to create a blurred image ahead of the retina to signal the eye to reduce its axial growth, balancing myopia control with clear central vision.

There is an ongoing need for innovative optical lens designs that may enhance vision correction while offering other benefits without compromising visual acuity.

## Summary

This disclosure improves the situation.

It is proposed a lens element comprising:

 a vision zone; and
 within at least part of the vision zone, chromatic light-scattering elements defined as elements configured for selective light scattering in at least one predetermined wavelength range,
 thereby inducing chromatic contrast reduction across said at least part of the vision zone.

Inducing chromatic contrast reduction across said at least part of the vision zone means that, over said at least part of the vision zone, an image quality (Q1) measured at a first wavelength (11) is at least 10% lower than a retinal image quality (Q2) measured at a second wavelength (I2).

Advantageously, the lens element allows reducing the image contrast for part of the visual spectrum, while maintaining a good visual acuity for the rest of visual spectrum. In other words, the lens element provides an optimized balance between the effect of correcting a visual impairment of the eye of the wearer and the effect of slowing down the progression of said visual impairment.

The image quality (Q) evaluates the quality of an image formed by the optical lens for an object, for example for central vision. Typically, the image quality may be determined using any well-known eye model and an optical lens model placed in front of the eye model in standard wearing conditions.

The image quality (Q) may be based on a Strehl ratio, and/or a Modulation Transfer Function (MTF), and/or a power error, and/or an astigmatism error, and/or a fraction of encircled energy radius, and/or, a spot diagram radius, and/or a point spread function (PSF), and/or an optical transfer function (OTF), and/or a visual Strehl ratio (VSX, VSOTF, VSMTF), and/or a wavefront aberrations.

The Strehl ratio corresponds to the ratio between the peak value of the actual point spread function (PSF) divided by the peak value of the diffraction-limited point spread function (PSF) for the same pupil size. The image quality (Q) may also be based on the visual Strehl ratio VSX, VSOTF and VSMTF of the optical system composed of the eye model and the optical lens.

The image quality (Q) may be based on the modulation transfer function (MTF). The modulation transfer function is a well-known quantitative measurement that describes the imaging performance of an optical system. It measures the contrast transfer as a function of the spatial frequency of the object being imaged and provides information about the optical system's resolving power and the amount of contrast degradation for different spatial frequencies. The modulation transfer function value may be determined by measuring the 3D surface of the optical lens, determining a 2D representation of optical path differences of a light beam arriving normal to the lens element, determining the point spread function over a pupil aperture, and determining the modulation transfer function over said pupil by a Fourier transform operation. For example, the area under the modulation transfer function curve between two specific limiting frequencies is measured and compared to the area under the diffraction-limited modulation transfer function curve for the same pupil size.

Typically, the modulation transfer function is calculated in the image plane. The image plane may be defined as a plane at a distance from a reference point of the optical lens corresponding to the inverse of the refractive power based on the prescription of the wearer, or based the best fitting sphere of the optical lens. The image plane may be defined as the plane for which the maximal MTF value can be measured.

In more details, for a given gaze direction a ray is propagated to the object space from the eye rotation center (ERC). An object point ProxO is then calculated using the ergorama, which associates gaze directions to proximities. Assuming the target wearer power is Pui, then the image plane should be positioned at a proximity Proxlm = Pui-ProxO from the vertex sphere, calculated along the ERC-Pupil axis. Once the object proximity ProxO and the Image proximity Proxl are defined, then the point spread function and the modulation transfer function can be computed as for any optical system. For instance: a beam of rays is propagated from the object point to the eye entrance pupil, so as to perform a regular sampling of the pupil. The optical path lengths should be stored during this step; the optical path lengths are used to compute the pupil function; a diffraction integral is applied to the pupil function in order to obtain the point spread function; and the modulation transfer function is computed from the point spread function using a Fourier Transform.

The value of the modulation transfer function (MTF) may be measured over the pupil area for wavelength (11) over a range of spatial frequencies comprised from 1 to 5, for example 1 to 10, cycles per degree is smaller than the value of the modulation transfer function (MTF) measured over the same pupil area for wavelength (l2) over the same range of spatial frequencies.

The image quality (Q) may be based on the power error. The focal planes of an object point of the visual environment passing through the optical lens may be distant from the retinal surface of the eye model. These distances may be converted into power errors expressed in diopters.

The image quality (Q) may be based on the astigmatism error. The tangential and sagittal focal planes of an object point of the visual environment passing through the optical lens may be distant. The distance between these two focal planes may be converted into an astigmatism error expressed in diopter.

The image quality (Q) may be based on the fraction of encircled energy radius. The encircled energy refers to the concentration of energy on the fovea or central part of the retina evaluated from the image at the retina of an object point of the visual environment passing through the optical lens model and the eye model. The radius of the point spread function (PSF) containing a predefined amount of energy, for example 50% or 80% is measured. The lower the measured radius is, the higher the quality of the image is.

The image quality (Q) may be based on the spot diagram radius which is defined as the root mean square (RMS) distance of the rays' intersections from the intersection of a chief ray. The spot diagram radius may be obtained by tracing rays from an object point of the visual environment that cover the pupil, and by computing their intersections with the retina of the eye model.

The image quality (Q) may be based on the point spread function (PSF). The point spread function is a well-known quantitative measurement that describes the blurring or spreading of light from a single point object, for example located at infinity in the visual environment. Typically, the point spread function value is determined by measuring the size of the image spot of light emitted from a point object and passing through the optical lens, for example using an eye-lens system model.

The image quality (Q) may be based on the optical transfer function (OTF) defining how different spatial frequencies are processed by the optical lens.

In an example, the lens element further comprises a layer extending over the at least part of the vision zone, the layer being infused with nanoparticles, wherein at least part of the chromatic light-scattering elements comprises the nanoparticles.

In an example, the layer and the nanoparticles are obtained by treating a coating solution by a solvent.

In an example, the lens element further comprises a layer extending over the at least part of the vision zone, the layer comprising discontinuous, at least partly metallic, islands, and at least part of the chromatic light-scattering elements comprise the islands.

In an example, the chromatic light-scattering elements comprise elements that induce Rayleigh scattering within the predetermined wavelength range.

In an example, the coating layer and the nanoparticles are obtained by treating a coating solution by a solvent.

In an example, a holographic technique is used to create the chromatic light-scattering elements.

In an example, the lens element is obtained by molding a substrate and the chromatic light-scattering elements comprise bubbles integrated into the substrate

In an example, the lens element further comprises a plurality of layers extending over the at least part of the vision zone, at least one layer comprising at least one set of light-scattering elements, at least part of the chromatic light-scattering elements comprising at least one of the sets of light scattering elements.

In an example, at least part of the chromatic light-scattering elements comprise chromatic elements combined with light-scattering elements, and the chromatic elements include colored ink drops.

In an example, at least part of the chromatic light-scattering elements comprise holes that have a size facilitating a transmission of scattered light in the at least one predetermined wavelength range.

In an example, at least part of the chromatic light-scattering elements are photochromic elements configured to react to light at least in the predetermined wavelength range.

In an example, at least part of the chromatic light-scattering elements comprise: light-scattering elements, and chromatic elements covering said light-scattering elements, the chromatic elements being configured for selectively absorbing light outside of the at least one predetermined wavelength range.

In an example, the lens element further comprises a light-scattering layer extending over the at least part of the vision correction zone and comprising the light-scattering elements, and a coating layer extending over at least part of the light-scattering layer, wherein the light-scattering elements are encapsulated, and wherein the coating layer comprises the chromatic elements.

In an example, the lens element further comprises a surface-altered layer extending over the at least part of the vision correction zone and comprising the light-scattering elements as nanoscale surface alterations.

In an example, the lens element optical article further comprises, within at least part of the vision correction zone, chromatic lenslets configured to induce formation of a chromatically-altered blurred optical image, the chromatically-altered blurred optical image inducing chromatic contrast reduction across said at least part of the vision correction zone, wherein the chromatic lenslets are distinct from the chromatic light-scattering elements. In an example, the vision correction zone is configured to induce formation of a clear optical image in a first plane being a focal plane, and the lens element further comprises, within at least part of the vision correction zone, chromatic lenslets configured to induce formation of a chromatically-altered blurred optical image in a second plane distinct from the first plane, the chromatically-altered blurred optical image inducing longitudinal chromatic aberration across said at least part of the vision zone, wherein the chromatic lenslets are distinct from the chromatic light-scattering elements.

It is further proposed an eyewear comprising the above lens element.

It is further proposed a head-mounted display comprising the above lens element.

## Brief Description of Drawings

Other features, details and advantages will be shown in the following detailed description and on the figures, on which:

[Fig. 1] illustrates the focusing of short (blue) and long (red) wavelength light relative to the retina and the resulting signal for axial length adjustment.

[Fig. 2] depicts the opposite focusing scenario, demonstrating how different wavelength focuses influence eye growth.

[Fig. 3] shows an example of optical lens design with a dual-zone configuration, combining a central vision correction zone with a peripheral diffusion zone.

[Fig. 4] and [Fig. 5] describe an example of wet coating process for incorporating dispersed nanoparticles in a lens.

[Fig. 6], [Fig. 7] and [Fig. 8] demonstrate examples of light-scattering properties of metallic nanoparticles embedded in a transparent matrix, using localized surface plasmon resonance.

[Fig. 9] presents examples of multi-layer structures of an optical lens incorporating discontinuous metal layers.

[Fig. 10] displays TEM images of examples of discontinuous gold layers on a $SiO_2$ layer.

[Fig. 11] shows a MiePlot simulation of scattering efficiency for different examples of particle-medium refractive indices.

[Fig. 12] explains the scattering efficiency concept.

[Fig. 13] illustrates examples of distributions of bubbles or particles within an optical lens.

[Fig. 14] represents examples of curves of scattering intensity as a function of wavelength that can be obtained for $SiO_2$ nanoparticles of different sizes.

[Fig. 15] depicts an example process of forming a diffusion particle by treating a coating solution.

[Fig. 16] illustrates schematically an example optical lens obtained by molding with bubbles integrated into a substrate.

[Fig. 17] and [Fig. 18] provide microscope images of examples of polycarbonate and CR39 lenses before and after coating, showing light-scattering surface alterations.

[Fig. 19] illustrates a schematic representation of an example wafer with different thicknesses of coating material.

[Fig. 20] illustrates schematically an example of optical lens with surface alterations and a coating layer.

[Fig. 21] illustrates an example tool for indenting a substrate surface to create light-scattering elements

[Fig. 22] and [Fig. 23] illustrate examples of techniques to create surface alterations.

[Fig. 24] and [Fig. 25] illustrate known designs of myopia control lenses.

[Fig. 26] and [Fig. 27] illustrates example designs of lenses with contiguous microlenses, including unifocal, bifocal, and Pi-Fresnel configurations.

[Fig. 28] and [Fig. 29] illustrate example optical lens designs combining lenslet zones and diffusive zones.

[Fig. 30], [Fig. 31] and [Fig. 32] illustrate example optical designs comprising bifocal and/or bizone lenslets.

[Fig. 33], [Fig. 34] and [Fig. 35] illustrates example optical designs comprising concentric rings of lenslets.

## Description of Embodiments

The proposed technique generally relates to an optical lens incorporating chromatic light-scattering elements. These elements exhibit combined optical properties of providing longitudinal chromatic aberration and light scattering to manipulate light in a unique manner.

The proposed technique leverages these properties to enhance overall optical functionality, for instance for the purpose of a prophylactic treatment of myopia.

The following definitions are provided in the context of the present disclosure.

An optical lens is an apparatus designed to refract and focus light along an optical axis. The optical axis is an imaginary line that passes through the geometrical center of the optical lens. The optical lens often has rotational symmetry about the optical axis.

Longitudinal chromatic aberration (LCA) is a phenomenon caused by a variation of refractive index with the wavelength of light, in which different wavelength lights focus at different positions along the optical axis, causing a dispersion that can be perceived as blur by a wearer of the optical lens.

Retinal photoreceptors are cells in the retina of the wearer responsible for converting light into signals that the brain interprets as visual images. Retinal photoreceptors involved in detecting the optical signals transmitted by the optical lens include cones (responsive to color) and rods (responsive to low light conditions). Cones are subdivided into S-cones which are sensitive to short wavelengths (blue light), M-cones which are sensitive to medium wavelengths (green light) and L-cones which are sensitive to long wavelengths (red light).

Previous studies and products in optical technologies have established various strategies for controlling myopia progression through peripheral visual field interventions. These interventions typically involve arrays of lenslets or microlenses that create a blurred image ahead of the retina, signaling the eye to halt further growth. Central areas of these lenses remain free from lenslets to ensure clarity in direct vision. This approach effectively manages the trade-off between myopia control and maintaining acceptable visual performance during off-center viewing conditions. However, neither the use of LCA to prevent myopia evolution nor the combination of LCA and light scattering properties in an optical lens has been contemplated in the state-of-the-art.

Natural cues such as induced by LCA are pivotal in regulating eye growth by influencing the eye's response to where different wavelengths of light focus relative to the retina. These cues, processed directly at the retina, involve complex interactions among the different types of cones.

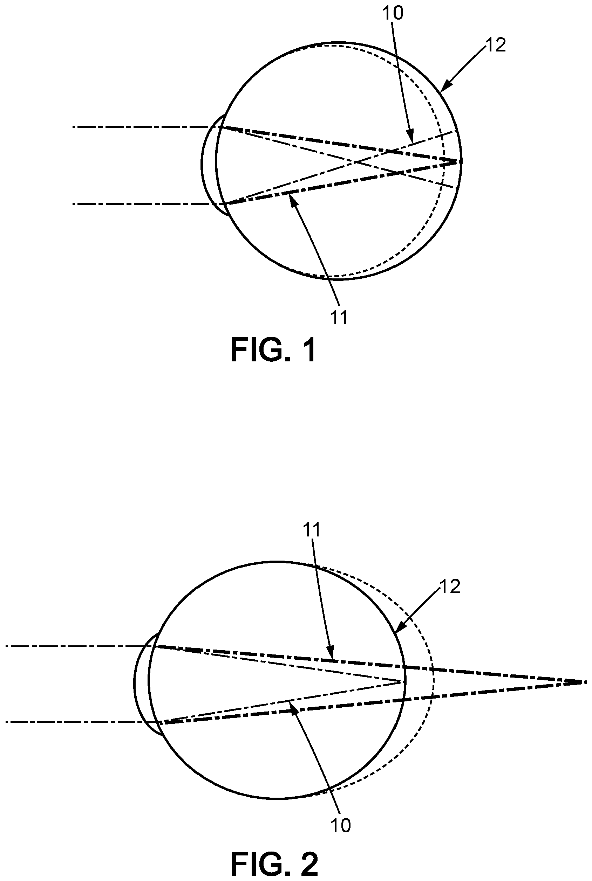

For instance, as shown on figure 1, if short (blue) wavelength light 10 is focused in front of the retina 12 and long (red) wavelength light 11 is focused on the retina, then this cue signals the eye to reduce its axial length.

Conversely, as shown on figure 2, if short (blue) wavelength light 10 is focused on the retina 12 while long (red) wavelength light 11 is focused behind the retina, then this cue signals the eye to increase its axial length.

In consideration of the above, the proposed technique may generally relate to an optical lens or lens element comprising:

    a vision zone or vision correction zone, for instance with a dioptric function; and
    within at least part of the vision zone, chromatic light-scattering elements defined as elements configured for selective light scattering in at least one predetermined wavelength range,
    thereby inducing chromatic contrast reduction across said at least part of the vision correction zone.

The "light-scattering elements" are elements within the lens that alter the path of light passing through, determined by their optical properties which are a function of their size and shape. Light-scattering elements may operate under Rayleigh scattering regime (for particles much smaller than the wavelength of light) or Mie scattering regime (for particles which size is comparable or superior to the wavelength).

"Chromatic elements" are, in general, understood as elements within the lens which have different properties for different wavelengths. For instance, a filter is a chromatic element in that it has different transmission intensities for different wavelengths.

The "chromatic light-scattering elements" are specifically configured to scatter light selectively based on wavelength, inducing LCA and producing a non-focused, blurred image across this part of the vision correction zone. Indeed, the use of the terms "chromatic" and "chromatic contrast reduction" in the context of the proposed technique refers to the differential dispersion of various wavelengths of light as they pass through the lens. This dispersion does not result in the traditional focusing of light but rather in the spreading or scattering of light along the optical axis, varying for different wavelengths. This effect is used to manipulate the focal properties of the lens, potentially enhancing vision correction or providing other optical benefits.

The "predetermined wavelength range" is a specific range of light wavelengths that the chromatic light-scattering elements are designed to target. These can be defined numerically as:

    blue light: approximately 450-495 nm,
    green light: approximately 495-570 nm, and
    red light: approximately 620-750 nm.

The selection of the wavelength range depends on the desired optical effect and the application of the lens.

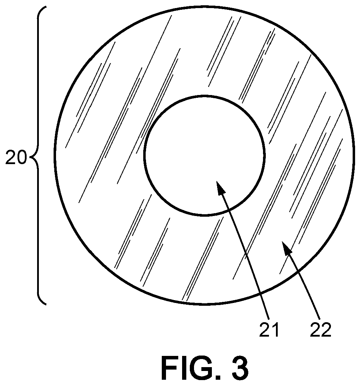

In an example, as shown in figure 3, the optical lens 20 may have a design with a dual-zone configuration.

In this example, the optical lens comprises a central (Rx) zone 21 which is a segment designed to provide clear, prescription-level vision correction. It possesses dioptric properties aligned with traditional vision correction lenses, maintaining sharp and focused vision in the central field of view.

In this example, the optical lens further comprises, adjacent to the central zone, a diffusion (Df) zone 22 which is a segment of the lens that also possesses a dioptric function (for instance the same dioptric function as the central zone) but is engineered to scatter light across various wavelengths.

Unlike the central zone, the diffusion zone is designed to create a uniformly blurred image. Depending on the specific design, the sharpest point of this blurred image can be intentionally placed in front of the retina, on the retina, or behind the retina. The positioning of this focus point is selected depending on the desired therapeutic or corrective effect for the wearer. This means that the image created by the diffusion zone aligns at a specific distance from the lens that corresponds, in wearing conditions, to a targeted area relative to the wearer's retina. As a comparison, the central zone is typically designed to ensure that in wearing conditions, images are sharply focused directly on the retina.

The expression "wearing conditions" refers to the set of circumstances under which the optical lens is typically used by the wearer. These conditions may include the average positioning of the lens relative to the wearer's eyes, typical viewing distances, and the environmental lighting conditions under which the lens is expected to perform. In the context of prescription eyewear, "standard wearing conditions" refer to the average conditions expected for a typical user, such as everyday indoor and outdoor activities. "Wearer-specific wearing conditions" may refer to custom adjustments made to account for individual differences in interpupillary distance, lens-to-eye distance, and specific visual habits or requirements that deviate from the norm.

Beyond the specific example of figure 3, the design and implementation of the diffusion zone can vary depending on specific optical needs and applications.

In a variation, the diffusion properties can be uniformly applied across the entire surface of the lens. This configuration ensures a consistent level of blur throughout the visual field.

Alternatively, the diffusion can be localized to specific patterns within the lens. This could include radial patterns, segmented zones, or gradient diffusions which increase or decrease in intensity from the center outward. Such designs can be tailored to provide blur in areas where it is most beneficial for controlling eye growth or enhancing depth perception.

Examples of manufacturing techniques to create an optical lens comprising chromatic light-scattering elements on at least part of a vision correction zone are now described.

### Wet coating with dispersed nanoparticles

In an example of the proposed technique, the optical lens comprises a coating layer extending over the at least part of the vision correction zone, the coating layer being infused with nanoparticles, and the chromatic light-scattering elements comprise the nanoparticles.

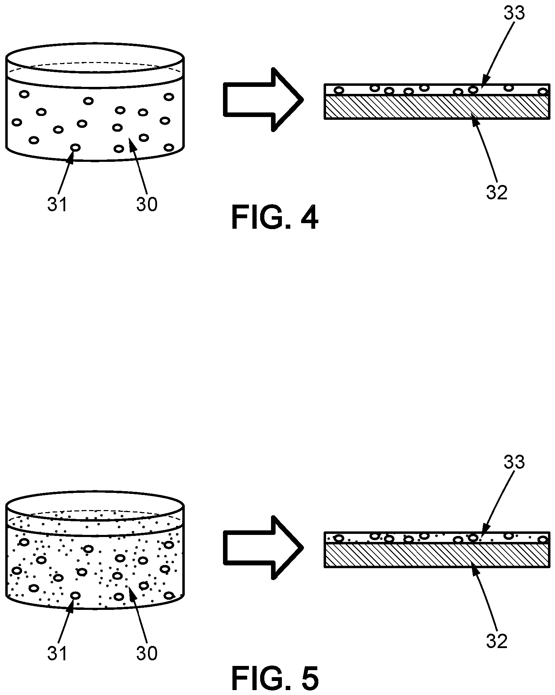

Figures 4 and 5 describe a manufacturing technique based on wet coating which is suitable to manufacture an optical lens according to this example.

A coating solution 30 comprising dispersed nanoparticles 31 is provided and utilized in a coating process of a lens 32 to provide, on a surface of the lens, a coating 33 having, when applicable, the same tint as the coating solution and embedding the nanoparticles.

The coating matrix and the nanoparticles may be chosen to have a different refraction index. This induces light-scattering and inherently contributes to the nanoparticles having light-scattering properties.

Some or all of the nanoparticles may have a specific size, or average size, in a size range allowing operation in a certain wavelength range. For instance, nanoparticles with a size comprised between 100 nm and 165 nm scatter more effectively red light.

Some or all of the nanoparticles may have absorption properties and therefore be tinted. For instance, nanoparticles absorbing red light have a blue tint as a result.

The nanoparticles may comprise organic nanoparticles and/or inorganic nanoparticles.

The coating matrix may be transparent to the visible spectrum (i.e. clear, not tinted as illustrated on figure 4) or may be tinted as illustrated on figure 5 (e.g. with a red tint or a blue tint).

The coating matrix may be organic or inorganic and may be sol-gel based.

### Adding discontinuous metal layer in HMC.

In an example of the proposed technique, the optical lens comprises a layer extending over the at least part of the vision correction zone, the layer comprising discontinuous metallic islands, and the chromatic light-scattering elements comprise the metallic islands.

The layer containing the metallic islands may be based on a dielectric substrate.

The metallic nanoparticles may include silver, gold and/or copper nanoparticles. These metals are chosen for their ability to interact with light at specific wavelengths, enhancing the chromatic light-scattering capabilities of the lens.

Placement of the metallic nanoparticles can be strategically selected depending on the intended optical effect. They may be arranged on the front surface of the layer, which is closest to the external environment when worn, or on the back surface, nearer to the wearer's eye.

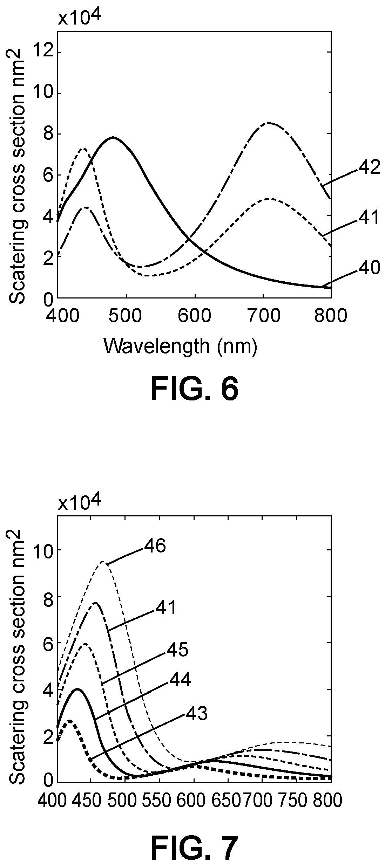

Figures 6, 7 and 8 illustrate the wavelength-selective scattering properties of light by metallic nanoparticles embedded in a transparent matrix. This scattering is attributed to localized surface plasmon resonance (LSPR), a phenomenon where metallic nanoparticles selectively scatter specific wavelengths of light - namely red, green, and blue - while allowing other colors to be transmitted without being scattered.

The scattering behavior of silver (Ag) and gold (Au) nanocubes on a titanium dioxide ($TiO_2$) substrate has been studied. It has been demonstrated, for instance, that the scattering spectrum of nanocubes are affected by, among other factors, the size of the nanocubes, the presence or absence of a dielectric substrate and the propagation direction of incident light.

On figure 6, the scattering cross section of silver nanocubes as a function of wavelength of incident light is represented by three curves 40, 41, 42. The first curve 41 corresponds to a scenario where the nanocubes are provided without a substrate, the second curve 42 corresponds to a scenario where the nanocubes are arranged on the front surface of a titanium dioxide substrate and the incident light is from a source facing the front surface of the substrate, and the third curve 43 corresponds to a scenario where the nanocubes are arranged on the front surface of a titanium dioxide substrate and the incident light is from a source facing the back surface of the substrate.

As shown on figure 6, when no substrate is present, Ag nanocubes induce a single scattering peak whereas Ag nanocubes placed on a $TiO_2$ substrate induce two distinct scattering peaks.

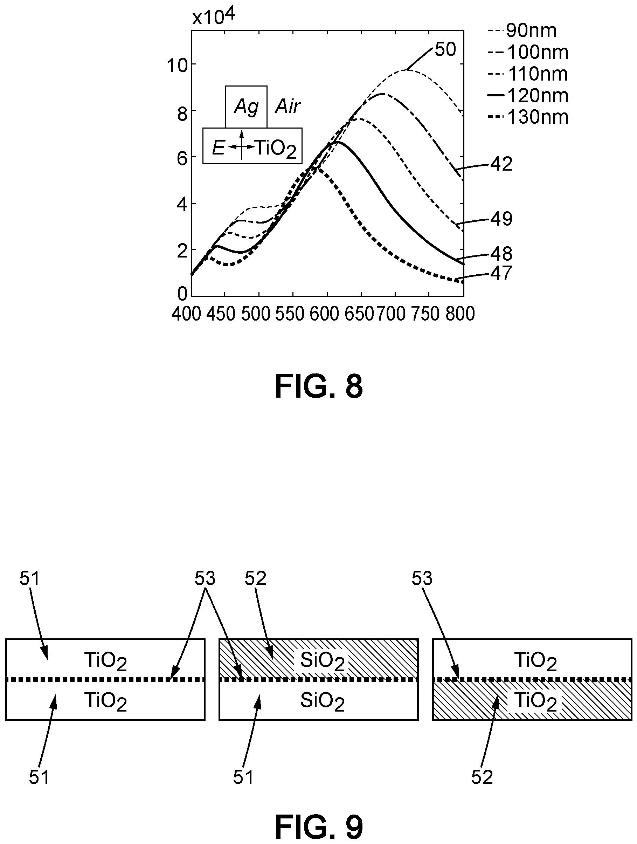

The separation between these peaks increases with the refractive index of the substrate. Additionally, the scattering intensity and the spectral range shift towards longer wavelengths as the size of the metallic nanoparticles increases. This effect is visually represented in figures 7 and 8 which show how different sizes of silver nanoparticles affect the light-scattering spectrum. On figure 7, the scattering cross section of silver nanocubes arranged on the front surface of a titanium dioxide substrate as a function of wavelength of incident light where the incident light is from a source facing the front surface of the substrate is represented by five curves 43, 44, 45, 41, 46 corresponding to different sizes of nanocubes: respectively 90 nm, 100 nm, 110 nm, 120 nm and 130 nm. On figure 7, the scattering cross section of silver nanocubes arranged on the front surface of a titanium dioxide substrate as a function of wavelength of incident light where the incident light is from a source facing the back surface of the substrate is represented by five curves 47, 48, 49, 42, 50 corresponding to different sizes of nanocubes: respectively 90 nm, 100 nm, 110 nm, 120 nm and 130 nm.

In figure 7, the Ag nanoparticles are placed on the front surface of the $TiO_2$ layer, resulting in blue light being scattered more than red light, whereas in figure 8, the Ag nanoparticles are placed on the back surface of the $TiO_2$ layer, resulting in red light being scattered more than blue light.

The characteristics of the light-scattering spectrum are also influenced by the specific placement of the discontinuous metal layer within the lens' multi-layer structure. This placement can modify how light interacts with the lens, resulting in different visual effects.

Figure 9 shows different examples of multi-layer structures of an optical lens:

a first example where a discontinuous metal layer 53 is arranged on a front surface of a first $TiO_2$ layer 51 and a second $TiO_2$ layer 51 is provided, the back surface of the second $TiO_2$ layer facing the front surface of the first $TiO_2$ layer,

a second example where a discontinuous metal layer 53 is arranged on a front surface of a $TiO_2$ layer 51 and a $SiO_2$ layer 52 is provided, the back surface of the $SiO_2$ layer facing the front surface of the $TiO_2$ layer, and

a third example where a discontinuous metal layer 53 is arranged on a back surface of a $TiO_2$ layer 51 and a $SiO_2$ layer 52 is provided, the front surface of the $SiO_2$ layer facing the back surface of the $TiO_2$ layer.

Physical vapor deposition (PVD) processes may be employed to deposit the metallic particles onto the dielectric substrate. During PVD, the growth mode of metals like Ag, Au, and Cu tends to be three-dimensional, forming island-like structures. The density of these metallic islands correlates with the vapor flux and the diffusion length during deposition. Parameters like substrate temperature and deposition rate, in particular, impact the final size and distribution of these islands. Higher substrate temperatures and lower deposition rates favor larger islands before the film becomes continuous. Additionally, ionic bombardment during deposition can enhance island formation.

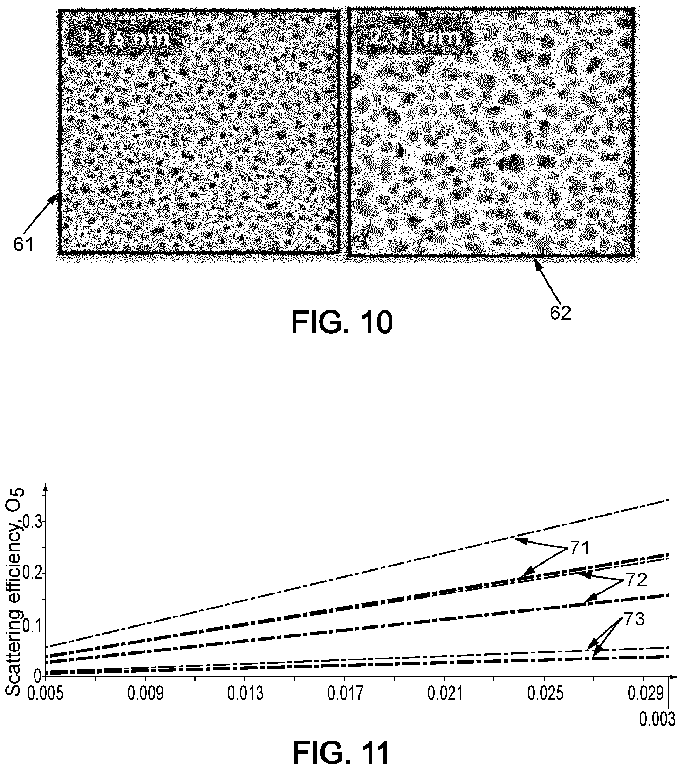

Figure 10 depicts TEM images 61, 62 of discontinuous gold layers of different thicknesses on a $SiO_2$ layer.

### Adopting Rayleigh Scattering in the Lens

In an example of the proposed technique, the chromatic light-scattering elements comprise elements that induce Rayleigh scattering within the predetermined wavelength range.

The chromatic light-scattering elements may have for instance a diameter smaller than or equal to 30 nm.

The chromatic light-scattering elements may comprise nano-bubbles. In this case, the elements are made of air or of an inert gas and have a refractive index of 1.

Alternatively or in combination with nano-bubbles, the chromatic light-scattering elements may comprise nanoparticles, for instance $SiO_2$ nanoparticles and have a refractive index corresponding to that of the material used to produce the nanoparticles.

The difference between the refractive index of the substrate and that of the chromatic light-scattering elements should be as high as possible to effect greater scattering of blue as compared to red light.

As in all other examples of the proposed technique, the chromatic light-scattering elements may be uniformly distributed across the whole vision correction zone or may be distributed across only a portion of the vision correction zone, for instance only across a peripheral region of the vision correction zone.

Nano-bubbles or particles sparsely incorporated in substrate may give rise to Rayleigh scattering. As the amount of Rayleigh scattering is inversely proportional to $\lambda^4$, blue light is scattered more than red light.

Figure 11 shows a MiePlot simulation of the scattering efficiency (Qs) against the particle diameter for blue (450 nm) and red (650 nm) lights, in three different scenarios each using a different set of particle-medium refractive indices (RD):

-    first scenario 71: the refractive index of the particles is 1.00 whereas the refractive index of the substrate is 1.60,
-    second scenario 72: the refractive index of the particles is 1.20 whereas the refractive index of the substrate is 1.60, and

third scenario 73: the refractive index of the particles is 1.50 whereas the refractive index of the substrate is 1.60.

The MiePlot simulation represents in each scenario two straight lines, respectively corresponding to the scattering efficiency as a function of particle diameter for blue (450 nm) light and for red (650 nm) light.

As Rayleigh scattering applies to the case when the scattering particle is very small (< 1/10 of wavelength), the simulation was done until the particle diameter is 30 $\mu$m. Apparently, a larger difference between the particle and medium RI increases Qs, as well as its difference between the blue and red lights.

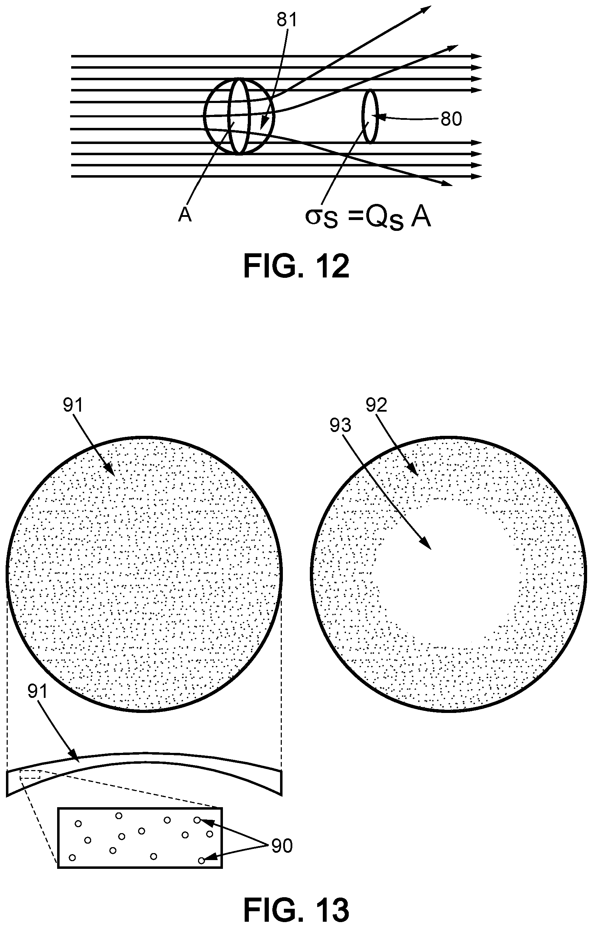

Figure 12 explains the meaning of Qs. During scattering, the size of the scattering shadow 80 is an effective cross-section ($\sigma$s), which is related to the geometrical cross-section (A) of a scattering particle 81 by a proportionality constant called scattering efficiency (Qs), according to the following formula:

$$\sigma s = QsA.$$

In such example of the proposed technique, the optical lens is lightly blue tinted in the absence of any blue dye.

As shown on figure 13, bubbles 90 or particles may be uniformly distributed in the optical lens 91 or distributed only at the peripheral region 92 of the lens. In the latter case, the optical lens gives the wearer a non-tinted vision at the lens centre 93 while effecting scattering of blue light at the lens peripheral region, which has larger LCA due to the greater prismatic effect.

Nano-bubbles may be incorporated in the substrate during its casting process via high speed mixing and vortexing of the monomer formulation and/or application of mechanical vibration. Nanoparticles may be incorporated in the substrate by introducing nanoparticles of different refractive index from the substrate during its casting process.

A non-uniform distribution, in the optical lens, of chromatic light-scattering elements inducing Rayleigh scattering may be achieved by utilizing a mold design having multiple inlets for injecting a monomer formulation having specifically selected mechanical properties, in particular viscosity and surface tension.

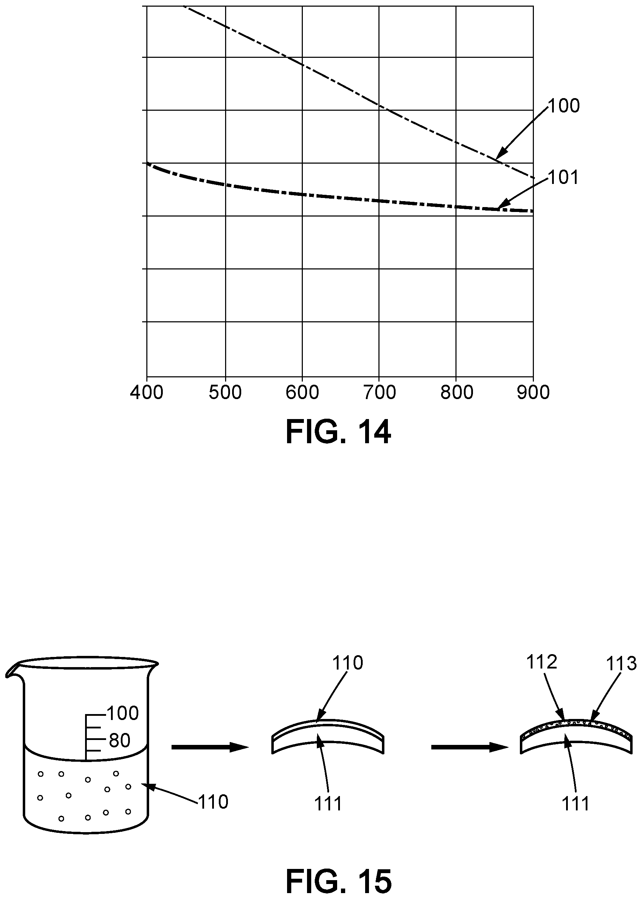

Figure 14 represents a first curve 100 of scattering intensity as a function of wavelength for SiO$_2$ nanoparticles having a size of 0.25 $\mu$m and a second curve 101 of scattering intensity as a function of wavelength for SiO$_2$ nanoparticles having a size of 0.6 $\mu$m. It can be seen that SiO$_2$ nanoparticles having a size of 0.25 $\mu$m exhibit Rayleigh scattering, which means they scatter more effectively blue light than red light.

## Wet coating to form the diffusion particle after treatment.

In an example of the proposed technique, the coating layer and the nanoparticles are obtained by treating a coating solution 110 by a solvent.

The schematic of this process is represented in figure 15.

A coating solution 110 is applied on a surface of an optical lens 111 and is then treated by a solvent such as water vapor to form the coating layer 112 and the nanoparticles 113.

The coating solution may comprise a coating matrix which may be organic, inorganic or sol-gel based and a precursor such as Ti(OC$_4$H$_9$)$_4$ or Si(OC$_2$H$_5$S)$_4$.

The coating matrix may be transparent with no absorption or may be tinted.

The size of the nanoparticles depends on how the solvent treatment is conducted. For instance, time and/or temperature of the solvent treatment may be controllable parameters in order to adjust the size of the nanoparticles.

In an example, the nanoparticles may have non-wavelength-selective light scattering properties as such, in which case the wavelength selectivity of the light scattering may be provided by an additional (chemical) treatment of the coating layer.

## Diffusion by holography

In an example of the proposed technique, a holographic technique is used to create the chromatic light-scattering elements.

Recording of light-scattering elements in a substrate by using holographic techniques is known. Any desired arrangement of the light-scattering elements in an optical lens may be achieved by this technique. For instance, the light-scattering elements may be recorded in locations homogeneously distributed across the optical lens, or only in specific zones, for instance according to a specific pattern.

The recording may be done for a specific wavelength, which corresponds to the wavelength of the laser used to record the light-scattering elements.

By using a blue monochromatic laser for instance, it is possible to record elements specifically scattering blue light. In addition, by using another laser, such as a red monochromatic laser, it is possible to record additional elements specifically scattering red light.

The manufacturing feasibility of recording chromatic light-scattering elements is currently limited to reflective chromatic light-scattering elements, in other words holographic "mirrors".

An optical lens comprising reflective chromatic light-scattering elements may be used, or intended to be used, in combination with a light source configured to illuminate the chromatic light-scattering elements from the back surface of the lens with light in the predetermined wavelength range.

## Diffusion in mass by molding

The optical lens may be obtained by molding a substrate and the chromatic light-scattering elements may comprise bubbles integrated into the substrate.

Bubble presence does not affect mean refractive power as air bubbles do not constitute lens material crossed by light.

There are two categories of molding techniques which are injection molding and casting.

When the optical lens is obtained by injection molding, it is possible, by controlling the injection molding procedure, to distribute the bubbles uniformly or not within the optical lens.

For instance, centrifugation can increase bubble concentration in the lens center. By doing so, it is possible for instance, to include within the vision correction zone an area devoid of bubbles. The lens part without bubbles can be positioned for near vision, aiding in uniform axial length growth around the fovea during near vision activities.

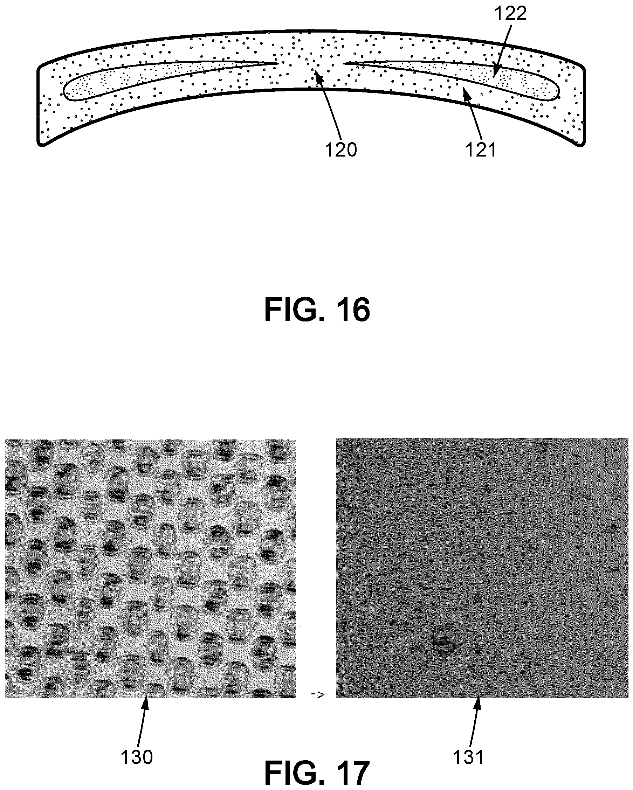

For instance, pressure can be controlled during warming and cooling to adjust bubble size based on lens thickness. For instance, ambient pressure could be set at a higher value at the beginning of the polymerization, while thin parts are not yet polymerized. In this manner, bubbles will be smaller and less numerous at the center of the lens. Then, once thin parts fully cured, the pressure could be decreased and bubbles will be more numerous and bigger in the thicker parts still uncured. Figure 16 schematically illustrates an example of resulting lens where thin parts 120 comprise less numerous and smaller bubbles than the central part 122 of thicker parts 121.

The bubbles may be spherical or non-spherical. Vibration may be conducted during polymerization to create non-spherical bubbles.

The optical lens may be thermochromic, allowing the size and/or number of bubbles to vary with temperature changes. For instance, bubbles that are compressed and disappear due to high pressure during injection may reappear upon warming.

When the optical lens is obtained by casting, a monomer is cast into a mold and then polymerized. Bubble size can be controlled by adding neutral gas and/or adjusting ambient pressure and/or temperature during monomer mixing.

## Multiple diffusive layers combination

The optical lens may further comprise a plurality of layers extending over at least part of the vision correction zone. Each layer comprises at least one set of light-scattering elements, where the chromatic light-scattering elements are included in at least one of the sets of light-scattering elements.

Several configurations may be considered.

For instance, at least one layer may be designed to be achromatic, meaning it does not selectively scatter light based on wavelength but instead uniformly diffuses light across the visible spectrum.

For instance, multiple layers may be configured to each contain a corresponding set of chromatic elements, which operate in different corresponding wavelength ranges. For instance, one layer may scatter blue light (450-495 nm) while another layer may scatter red light (620-750 nm).

The layers may cover distinct areas of the lens. For example, a central layer may scatter light differently compared to a peripheral layer, enhancing vision correction and therapeutic effects based on the area of the visual field.

The layers may be partially superimposed to create complex light-scattering effects. This can help fine-tune the optical properties of the lens by combining the scattering effects of different layers.

## Holes filled with colored ink

The optical lens may incorporate chromatic light-scattering elements that include light-scattering elements with holes filled with colored ink.

Specifically, the holes may be filled with blue ink to selectively scatter blue light, enhancing chromatic aberration and creating a distinct visual effect.

## Ink Drops on Surface

The optical lens may include chromatic light-scattering elements that are created by placing colored ink drops on the lens surface.

The colored ink drops can include blue ink to selectively scatter blue light.

## Holes with chromatic transmission

The optical lens may include a microarray of black or grey "holes", in the form of structures behaving as chromatic filters for specific wavelengths. These "holes" can filter defined wavelengths, such as blue light, using technologies like holographic filters.

The holes can be configured to completely absorb a given wavelength, in which case they are referred to as "black holes," resulting in a black modulation transfer function (MTF). For example, a hexagonal mesh with a 1.5057 mm step and 1 mm hole diameter provides such black MTF.

In other cases, the holes may be configured to be partially transmissive ("grey holes"), meaning that the MTF can be intermediate, lying between the black hole MTF and the diffraction-limited MTF. By adjusting the diameter of these holes, it is possible to modify the MTF characteristics.

Changing the diameter of the holes within a hexagonal mesh (2 mm step) produces a range of MTF values. Larger diameters result in more significant MTF degradation. This effect is also observed with a squared mesh (1 mm step) where different hole diameters are utilized.

For spatial frequencies that are multiples of $p/\lambda$ (where $p$ is the step of the mesh, in other words the distance between the centers of adjacent 'holes', and $\lambda$ is a chosen wavelength), rebounds in the MTF can occur because the transmission properties of grey holes modulate the amplitude of the MTF degradation. This phenomenon has been observed experimentally in an example where $\lambda$=550 nm.

The transmission coefficient t of the grey holes influences the MTF. A transmission t=0 corresponds to black holes, whereas higher transmission values lead to less pronounced MTF degradation. This modulation of MTF amplitude by varying transmission has been observed experimentally with hexagonal mesh configurations (step = 2 mm and varying hole diameters and transmissions) as well as squared mesh configurations (step = 1 mm and varying hole diameters and transmissions). In all contemplated examples, as the hole diameter increases, the MTF degradation becomes more substantial, indicating a direct correlation between hole size and optical performance.

These black and grey holes enable the lens to function as a chromatic filter, selectively blocking or transmitting specific wavelengths. The design allows for precise control over the optical properties, making it suitable for applications requiring specific wavelength filtering while maintaining overall lens performance.

## Photochromic dyes

The optical lens may incorporate photochromic elements within the chromatic light-scattering elements. These elements are designed to react to light, particularly in the predetermined wavelength range, to dynamically adjust the lens properties:

The photochromic elements may be configured to activate under specific lighting conditions, altering their optical properties to enhance vision correction or therapeutic effects.

## Combination of Chromatic and Diffusive Elements

The optical lens may combine chromatic elements with diffusive microstructures.

For instance, optical lenslets may be integrated with diffusive zones, where the lenslets are light-scattering elements, specifically diffusive microstructures which create defocus, and the diffusive zones are chromatic elements, specifically chromatic light-scattering elements configured to scatter specific wavelengths, optimizing vision correction and myopia control.

For instance, phase-shift structures or other techniques may be applied to selectively reduce contrast for specific wavelengths, enhancing visual comfort and therapeutic efficacy.

For instance, the light-scattering elements may be encapsulated in a layer extending over the at least part of the vision correction zone and the chromatic elements may be provided in the form of a coating layer extending over at least part of the layer comprising the light-scattering elements.

For instance, the coating layer may be arranged in direct contact with the light-scattering elements and may participate in encapsulating the light-scattering elements.

For instance, the optical lens may further comprise an intermediate layer between the coating layer and the light-scattering elements and the intermediate layer may participate in encapsulating the light-scattering elements.

For instance, the intermediate layer may comprise adhesive and/or a film and/or a wafer.

Various configurations and manufacturing techniques are detailed below to achieve light-scattering elements that may be combined with chromatic elements.

## Encapsulation technique

An optical lens with a light-scattering function on its surface can be obtained through various methods, such as injection molding or laser machining, which allow covering a surface of the lens with a high number of local alterations.

In addition to the light-scattering design, it is advantageous for the optical lens to retain scratch resistance or anti-reflective functionalities that are widespread in optical lenses devoid of light-scattering elements.

To do so, a covering layer may be provided to encapsulate the scattering surface. The covering layer may be a hard coat, the adhesive layer of a laminated film, or a polymer overmolded on the scattering surface.

However, the properties of the covering layer must be considered as they can affect the light-scattering properties. In some cases, the determination of the light-scattering function may include a compensation of the expected optical properties of the covering layer.

For instance, in the case where the lens is coated, if the coating surface is smooth and of about the same refractive index than the altered substrate, then light scattering will be annealed or highly reduced. It is possible to use a low thickness and/or low viscosity coating to minimize the smoothness of the coating surface. Further, the substrate/coating combination may be chosen so as to maintain a significant refractive index delta between the substrate and the coating.

Another possibility is to directly apply the light-scattering function to the coating surface. However, this approach faces limitations due to manufacturing constraints (e.g., 2D limitations, delamination risks between coating and substrate). It is then preferable to integrate the light-scattering function into the lens mold rather than apply it to each lens individually.

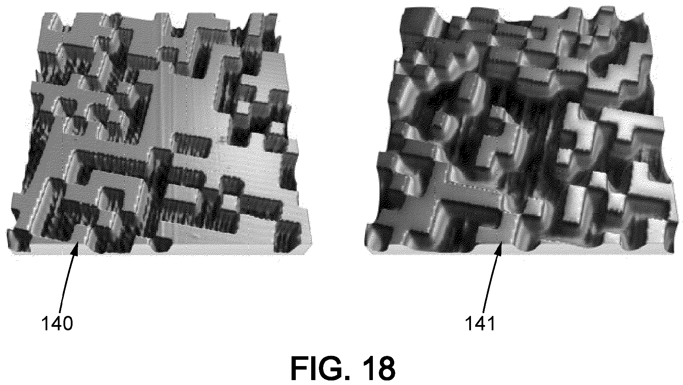

For example, microscope images of a polycarbonate (PC) lens are provided in figures 17 and 18.

On figure 17, a first image 130 corresponds to the lens that has been laser-engraved but not yet coated. A second image 131 corresponds to the same lens after coating, which shows that the pattern originally present before coating has nearly disappeared. This behavior can be explained by the refractive index ratio PC/coating which, in this example, is close to 1, more exactly equal to 1.591/1.60.

On figure 18, a first image 140 corresponds to the lens that has been CR39 surface-engraved but not yet coated. A second image 141 corresponds to the same lens after coating, which shows that the pattern originally present before coating has been altered but is still mostly apparent.

Light scattering, whether brought by laser-engraving, by sandblasting technology or by CR39 surface engraving demonstrates that coating does not necessarily drown the surface alterations and that high levels of light scattering may be maintained despite a slight reduction due to wetting effects and slope reductions.

Tests have been conducted where the target light-scattering function is prototyped in air and the alterations' magnitude is enhanced at the interface with the encapsulating material.

Specifically, a mold altered with a magnitude more than 5 times higher than required in air has been injected with polycarbonate to obtain a wafer. The wafer has then been overmolded with PMMA. Other combinations of wafer material and coating material are suitable as long as the coating material has a refractive index more than 0.1 lower than the wafer material.

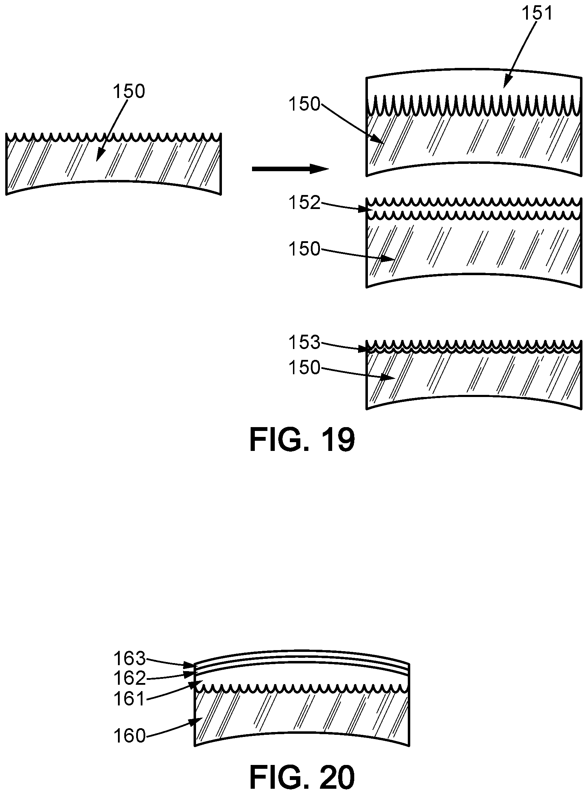

Figure 19 is a schematic representation of the wafer 150 respectively:

- uncoated,
- overmolded with a thick layer 151 of coating material,
- overmolded with a layer 152 of coating material having a medium thickness, and
- overmolded with a thin layer 153 of coating material.

Tests showed that, as showed on figure 19, when the thickness of the coating material is sufficiently low to exhibit a low smoothing effect, a significant part of the alteration magnitude of the surface of the wafer can be reproduced in practice at the surface of the coating material.

In intermediate cases where the thickness of the coating material is higher, encapsulation material reproduces only part of the encapsulated surface: some alterations of the surface of the wafer are partially reproduced at the surface of the coating material while some other alterations of the surface of the wafer are not reproduced at all at the surface of the coating material.

As represented on figure 20, the optical lens according to the encapsulation technique comprises at least a substrate 160 having surface alterations of greater amplitude that would be required, considering the substrate alone in air, to obtained desired light-scattering properties and a coating 163. Said optical lens may further comprise one or more intermediate elements in between the coating 163 and the substrate 160, e.g. one or more films 162 or wafers and/or one or more additional layers 161 such as pressure-sensitive adhesive or glue.

An optical lens may include a surface-altered layer extending over at least part of the vision correction zone, comprising nanoscale surface alterations as light-scattering elements.

These alterations can be obtained by applying abrasive techniques to create a roughened surface, by using embossing techniques to form desired patterns and/or by mechanically indenting the surface of the optical lens with a specific tool.

These abrasive, embossing or indentation techniques are quick, cheap and statistically reproducible alternatives to laser engraving.

Laser marking lenses is energy and time-consuming. Further, ensuring consistent engraving positions can be excessive for merely reducing contrast. Further, laser engraving techniques may generate local heat, potentially damaging added value coatings.

Abrasive, embossing or indentation techniques allow modifying the lens surface to introduce a light-scattering functionality. Disordered local alterations can enhance the uniformity of the image transmitted by the optical lens towards the eye of a wearer.

By applying a specific strength to a tip in contact with the substrate, permanent plastic deformation occurs, altering geometry, refractive index, crystallization, or molecular orientation, all affecting optical properties.

Repeated indentations create light scattering. The elastic response of the material means the indented defects will be smaller than the indenter itself.

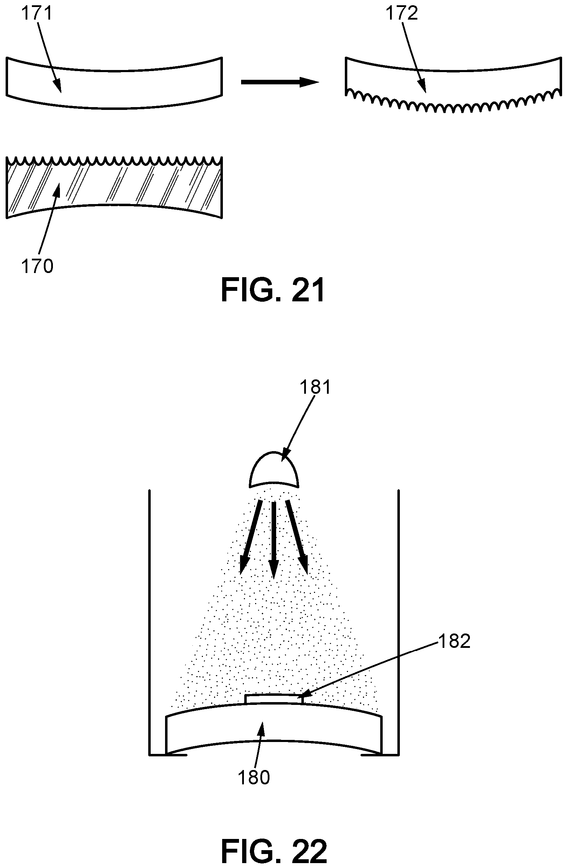

As illustrated on figure 21, a dedicated tool 170, made from homogeneous metallic material may be provided to indent a surface of the substrate 171 to obtain the indented surface 172. The tool may indifferently be obtained through machining, diamond turning, nickel replication, laser machining, sandblasting, or master replication.

Potential materials include aluminum, copper, steel, brass, phosphorous nickel.

Alternatively, a tool can be made using sandpaper pasted onto a wedge (hard, semi-hard, or foam).

The indentation can be assisted by warming or cooling for desired effects. Warmed indentation may lead to embossing, while cooling can cause beneficial cracks.

The indented material could be the lens substrate, a hard coat layer, or a stack of anti-reflective layers, or a combination thereof. The tool motion can be normal or include a tangential component, with static, dynamic, or cyclic movements (e.g., vibrations) to improve efficiency or tune the scattering effect.

The tool size can vary, moving over the lens surface if smaller than the lens. Higher efficacy of indentation can be targeted in specific lens zones.

Additionally, local damage to the surface can be achieved by shock methods like sandblasting as illustrated on figure 22, where the flow of sand from a sand blaster 181 or use of glass micro balls can tune scattering angles. Masking parts of a surface of the lens 180 with tape 182 can protect certain areas from undesired impacts.

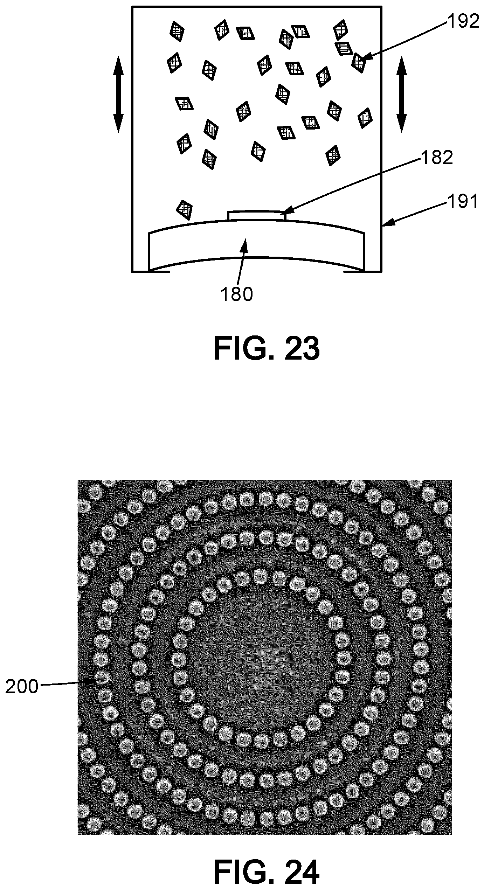

Placing, as shown on figure 23, the lens 180 against an internal face of a shaker 191 containing abrasive chips 192 has also shown promising results.

**Chromatic Lenslets**

The optical lens may be configured so that:

the vision correction zone is configured to induce formation of a clear optical image in a first plane being a focal plane, and
the optical lens further comprises, within at least part of the vision correction zone, chromatic lenslets configured to induce formation of a chromatically-altered blurred optical image in a second plane distinct from the first plane, the chromatically-altered blurred optical image inducing longitudinal chromatic aberration across said at least part of the vision correction zone,
wherein the chromatic lenslets are distinct from the chromatic light-scattering elements.

The chromatic lenslets may include a first set of lenslets (for instance blue lenslets) having a first optical power and a second set of lenslets (for instance red lenslets) having a second optical power smaller than the first optical power,

In other words, the optical lens can include chromatic lenslets within the vision correction zone to induce chromatically-altered blurred images at distinct planes for different wavelengths, creating longitudinal chromatic aberration.

The chromatic lenslets may include bifocal lenslets comprising a first area with a first optical power and a second area with a second optical power with a smaller value than the first optical power.

The first area and/or the second area may each have specific properties, for instance different diffusive properties and/or different chromatic properties.

For instance:

the first area may be a central area and the second area may be a peripheral area,
the first area may be diffusing or non-diffusing,
the second area may be diffusing or non-diffusing,
the first area may be blue, and/or
the second area may be red.

In an example, the central area is blue and is configured to induce formation of a blurred optical image in a plane corresponding to the first optical power while the peripheral area is red and is configured to induce formation of a red sharp optical image in a plane corresponding to the second optical power. This means that in this case the central area is diffusive and filters red wavelengths while the central area is non-diffusive and filters blue wavelengths.

The use of chromatic lenslets in an optical lens, as illustrated in the above example, is advantageous for a myopia control application with peripheral defocus, slowing myopia progression while preserving visual acuity during off-center viewing.

Current market solutions for myopia control include refractive lenslets or annular microstructures that create defocus or scattering dots.

For instance, figure 24 depicts an example optical design of a Essilor Stellest lens, comprising concentric rings of aspherical microlenses 200. This optical design may create multiple volumes of non-focused light in front of the retina.

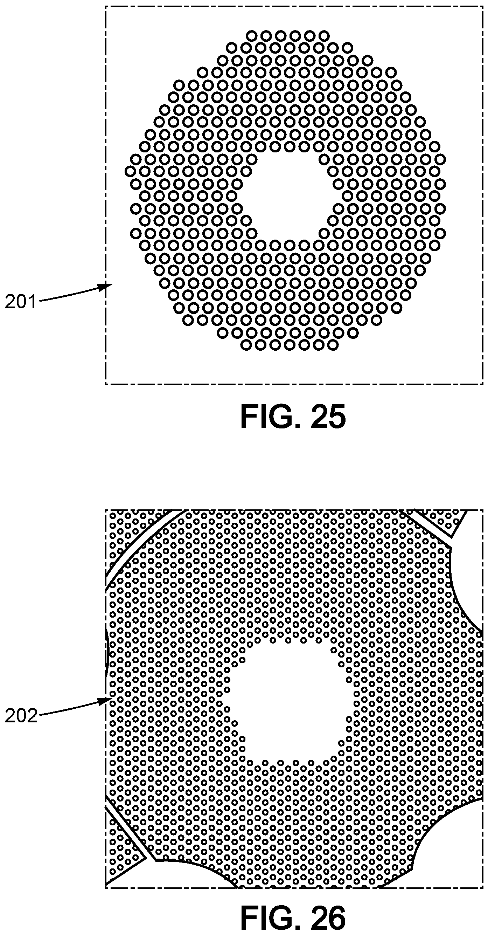

For instance, figure 25 depicts an example optical design of a Hoya Myosmart lens, comprising an island-shaped pattern of microlenses 201 on a hexagonal array. This optical design may create multiple defocus in front of the retina.

However, none of the current market or known experimental solutions for myopia control optimize chromatism.

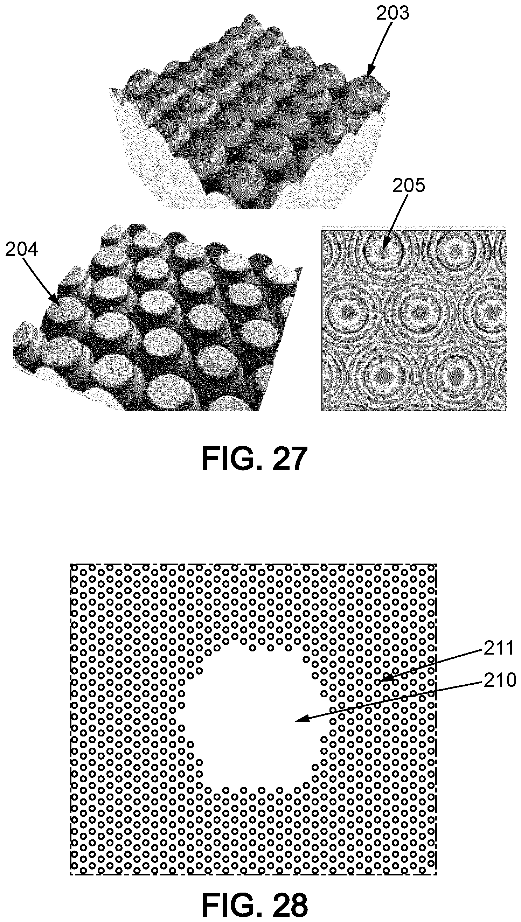

Other designs combining refractive behavior and diffractive behavior by lenslets are known. For instance the lenslets may be unifocal spherical or aspherical, bifocal, diffractive Pi-Fresnel. The lenslets may be contiguous or not. A known optical design combines a central lenslet-free zone with a peripheral zone comprising a hexagonal array of contiguous lenslets. For instance, figure 26 depicts an example optical design hereafter referred to as Octopus design, as an hexagonal array of contiguous microlenses 202 with a free zone at the center, allowing a focimeter measurement of the lens optical center. The contiguous microlenses 203 can be, as shown on figure 27, unifocal microlenses 203, bifocal contiguous microlenses 204 or Pi-Fresnel contiguous microlenses 205.

The lenslets may have a so-called "gradient law", meaning a variation of the optical function of the lenslets, such as a variation of surfacic power of aspherical microlenses with the lens eccentricity.

The area devoid of lenslets may have a single spherical power or may exhibit a power variation. For instance, the optical lens may be unifocal or progressive.

The combination, in an optical lens, of myopic defocus provided by lenslets and of longitudinal chromatic aberration provided by chromatic light-scattering elements is an approach that has not been found in the prior art and that may provide improvements in various possible fields of ophthalmic optics, including the control of myopia progression.

The following definitions are provided in the context of the present disclosure.

The vision correction zone is a zone of the optical lens which contributes to vision correction. Typically, the vision correction zone may extend over most or all of a finished optical lens such as a spectacle lens. The vision correction zone provides a dioptric function which is adapted for a wearer, potentially including a sphere, a cylinder, a prism, etc.

The vision correction zone may comprise one or more diffusive zones and one or more lenslets zone. Multiple zones may partially or totally overlap.

A "diffusive zone" is a zone comprising chromatic light-scattering elements. For instance, if the optical lens comprises a central area and a peripheral area, where the central area is devoid of chromatic light-scattering elements and the peripheral area comprises chromatic light-scattering elements, then the peripheral area is the diffusive zone. The optical lens may comprise a plurality of diffusive zones, each diffusive zone representing the locations of a population of chromatic light-scattering elements having similar properties.

A "lenslets zone" is a zone, within the vision correction zone of the optical lens, comprising chromatic lenslets.

The vision correction zone may further comprise one or more zones without chromatic light-scattering elements or chromatic lenslets.

Each zone among the diffusive zone(s), lenslets zone(s), and zone(s) without chromatic light-scattering elements or chromatic lenslets may be configured to have specific chromatic characteristics, which may be different from one zone to another. For instance, a lenslet zone may have different chromatic properties than another lenslet zone or than a diffusive zone, and two distinct diffusive zones may also have different chromatic properties.

Examples of optical lenses comprising diffusive zones, lenslet zones and zones without chromatic light-scattering elements or chromatic lenslets are now described. The focus of the following examples is not on how to make chromatic lenslets or chromatic diffusion, since this aspect is already described in previously mentioned examples, but on how to combine them to have a beneficial effect for a wearer.

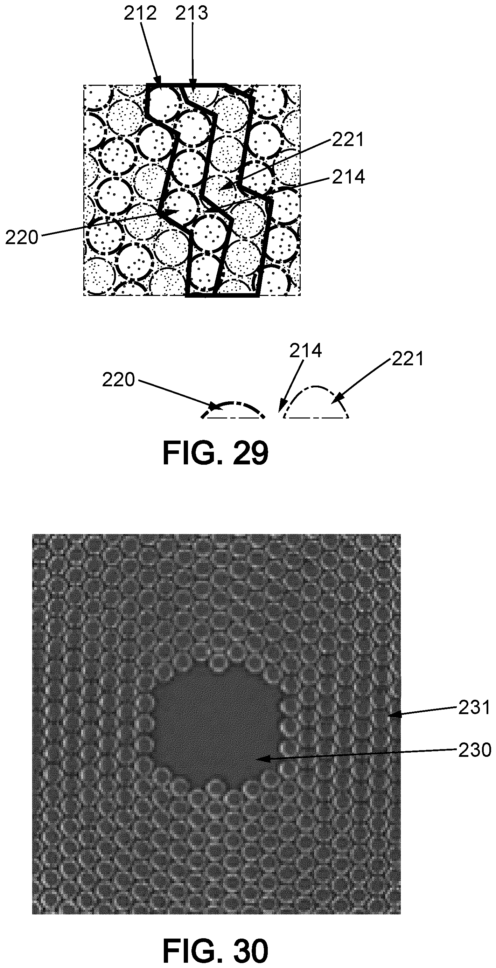

In an example illustrated on figures 28 and 29, the optical lens comprises:

> a clear zone 210 (for instance a central zone) which does not scatter light and induces formation of a focused image, and,
>
> in a zone 211 distinct from the clear zone, a first lenslet zone 212 comprising a first population of lenslets 220, a second lenslet zone 213 comprising a second population of lenslets 221, and a diffusive zone 214 comprising chromatic light-scattering elements.

In figures 28 and 29, the optical design is an Octopus-based design and the lenslets of the first population of lenslets and the second population of lenslets are represented as unifocal lenslets.

The first population of lenslets is configured to scatter blue light and not to scatter red light. The second population of lenslets is configured to scatter at least red light and possibly, but not necessarily, not to scatter blue light. Both the first population and the second population of lenslets induce formation of a blur on the retina by creating multiple defocused images in front of the retina. Further, the first population of lenslets has a higher spherical power than the second population of lenslets. Therefore the combination of the first lenslet zone and the second lenslet zone provides chromatic properties by making red light more "focused" on the retina than blue light. Further, the combination of the first lenslet zone and the second lenslet zone avoids disturbing wearer vision, because they do not create any homogeneous image usable for good vision by the wearer.

The chromatic light-scattering elements are configured to scatter blue light and not to scatter red light. For instance, the chromatic light-scattering elements may be configured to scatter light having a wavelength of 450nm without inducing defocus. Therefore, the presence of the diffusive zone contributes to contrast reduction especially in blue.

Optionally, the transmission spectrum of the clear zone may be chosen so that the focused image has a specific color e.g. red.

The presence of the first lenslet zone, the second lenslet zone, the diffusive zone and the clear zone provides a combination of blue, red and clear images towards the pupil of the wearer, which allows preserving accurate color perception of the wearer.

The use of two populations of optical lenslets with different colors is not mandatory. Alternatively, the optical lens may comprise a single lenslet zone configured to scatter blue light and inducing formation of a blue blur on the retina, a diffusing zone configured to scatter blue light and a clear zone inducing a red focused image. This allows coexistence of two kinds of blue blur, one provided by the lenslet zone and the other by the diffusive zone while red light is focused on the retina.

In an example illustrated on figures 30 to 32, the optical lens comprises:

a clear zone 230 (for instance a central zone) which does not scatter light and induces formation of a focused image, and,
in a zone 231 distinct from the clear zone, a first lenslet zone 232 comprising a first population of lenslets, a second lenslet zone 233 comprising a second population of lenslets, and a diffusive zone 234 comprising chromatic light-scattering elements.

In figures 30 to 32, the optical design is an Octopus-based design and the lenslets of the first population of lenslets and the second population of lenslets are represented as bifocal lenslets comprising a central area 240, 242 and a peripheral ring 241, 243.

The peripheral rings of the lenslets have light scattering properties and provide non-focused light in front of the retina.

The peripheral rings of the lenslets further provide chromatic properties, which result of the peripheral rings 241 of the first population of lenslets having a first transmission spectrum (e.g. "blue lenslets" which transmit blue light and filter red light), and the peripheral rings 243 of the second population of lenslets having a second, distinct transmission spectrum (e.g. "red lenslets" which transmit red light and filter blue light).

The peripheral rings of the lenslets may further have distinct dioptric functions. For instance, the peripheral rings of the blue lenslets may have a higher optical power than the peripheral rings of the red lenslets. Such configuration increases chromatism and makes the red signal closer to being focused on the retina than the blue signal.

The use of two such populations of lenslets allows formation of multiple defocused images in front of the retina. In addition, the diffusion zone allows optimizing contrast especially at blue wavelengths.

In addition to the bifocal lenslets of figures 30 to 32, it is also possible to use a third population of bizone lenslets having, like bifocal lenslets, a central area and a peripheral ring, and where, contrary to bifocal lenslets, the peripheral ring does not induce defocus but comprises instead chromatic light-scattering elements configured for selective light scattering in a certain wavelength range.

The use of two populations of optical lenslets which peripheral ring has a different color is not mandatory. For example, the optical lens may comprise a first lenslet zone comprising a first population of bifocal lenslets which peripheral ring indices a blue blur by defocus and a second lenslet zone comprising a second population of bizone lenslets which peripheral ring comprises chromatic light-scattering elements configured for selective light scattering of blue wavelength. Two kinds of "blue-blur" are then simultaneously provided by the first population and the second population of lenslets while red wavelengths may be focused on retina by the clear zone.

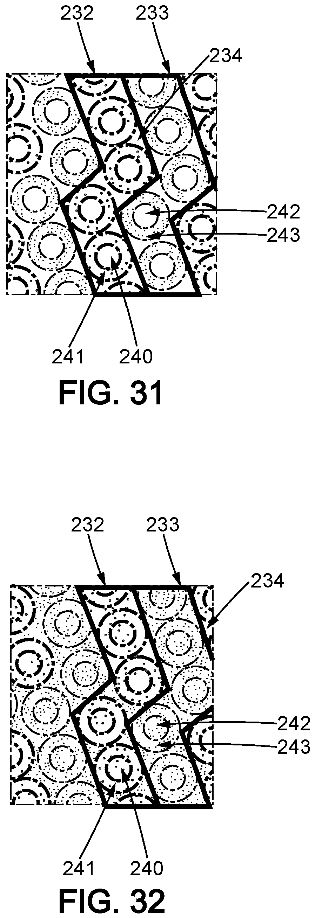

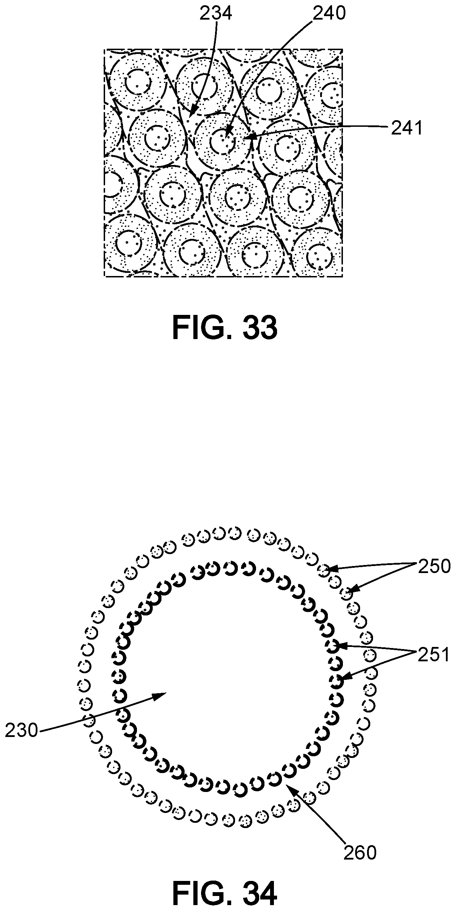

Another possibility, as represented on figures 32 and 33 is that the whole lenslets are colored instead of only the peripheral ring.

For instance, as represented on figure 32, the bifocal and/or bizone lenslets may have the same color (blue or red) in their central part 240, 242 as in their peripheral ring 241, 243. Similar chromatism properties are then obtained as in the example of figure 31. Equilibrating the proportions of blue and red lenslets allows providing a comfortable vision with a neutral color rendering.

As above, the use of two populations of optical lenslets with different colors is not mandatory. For example bifocal blue lenslets which peripheral rings are configured to induced a blue blur by defocus may be associated to bizone lenslets comprising on their peripheral rings chromatic light-scattering elements configured for selective light scattering of blue wavelength.

In another example, the optical lens comprises a single population of bifocal lenslets may be provided as indicated on figure 33, with blue peripheral rings 241 configured to induced a blue blur by defocus and red central areas 240 configured to focus a red image on the retina. In addition or instead of this single population of bifocal lenslets, the optical lens may comprise a single population of bizone lenslets, with peripheral rings comprising chromatic light-scattering elements configured for selective light scattering of blue wavelength and red central areas configured to focus a red image on the retina.

In another example, the optical lens comprises a single population of bifocal lenslets, each lenslet having a blue peripheral ring configured to induced a blue blur by defocus and a central area comprising chromatic light-scattering elements configured for selective light scattering of blue wavelength.

In another example, the optical lens comprises a first population of bifocal lenslets having red peripheral rings with low defocus and a second population of bifocal lenslets having peripheral rings in blue with higher defocus, with both populations of bifocal lenslets having a central area comprising chromatic light-scattering elements configured for selective light scattering of blue wavelength.

In all above examples where the optical lens comprises bizone lenslets comprising a central area and a peripheral ring, where the peripheral ring comprises chromatic light-scattering elements configured for selective light scattering of blue wavelength, an alternative possibility is that the entirety of the bizone lenslets (not only their peripheral ring but also their central area) comprises the chromatic light-scattering elements configured for selective light scattering of blue wavelength.

An example of suitable manufacturing process of an optical lens as depicted on figures 30 to 33 may comprise the following steps:

- providing an optical lens with a smooth surface,
- altering the surface by making bifocal spherical or aspherical contiguous microlenses on the surface,
- adding a red or a blue filter on the microlenses depending on the desired optical design,
- spreading a light diffusing blue on the microlenses by tampography, and
- polishing the tops of the microlenses (the central areas) to reduce diffusive properties in order to allow formation, by the central areas of the microlenses, of a focused image on the retina.

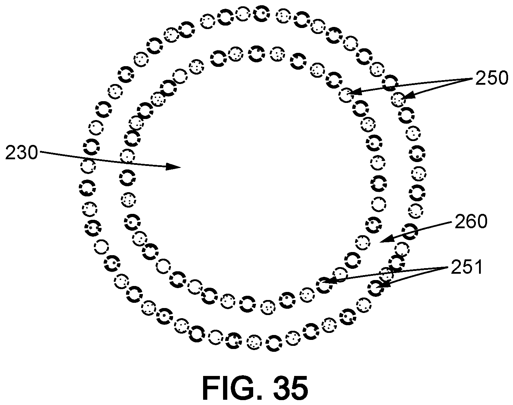

In an example illustrated on figures 34 and 35, the optical lens comprises:

a clear zone 230 (for instance a central zone) which does not scatter light and induces formation of a focused image, and,
in a zone distinct from the clear zone, a plurality of concentric rings,
where each concentric ring is formed of tangent lenslets"
where lenslets of the same ring have the same optical power and lenslets of consecutive rings have different optical powers.

In addition, some of the lenslets 250 are configured to scatter blue light and not to scatter red light while some other lenslets 251 are configured to scatter at least red light and possibly, but not necessarily, not to scatter blue light.

Said lenslets configured to scatter blue/red light induce formation of a blue/red blur on the retina by creating multiple defocused images in front of the retina.

Optionally, the optical lens may further comprise one or more diffusive zones 260 comprising chromatic light-scattering elements. The one or more diffusive zones may extend in between concentric rings.

In an example as depicted on figure 33, the blue and red lenslets are alternated between two adjacent rings: each ring is formed of lenslets having the same color.

In an example as depicted on figure 34, the blue and red lenslets are alternated on the same ring.

In an example, a single population of lenslets inducing defocus (for instance blue lenslets inducing blue defocus) can be used while other rings or other areas between these lenslets can be configured to induce no defocus but rather selective light scattering of blue wavelength.

In an example, the plurality of concentric rings comprise central rings and peripheral rings, the lenslets of the peripheral rings have a lower refractive power than the lenslets of the central rings, and the lenslets of one or more of the peripheral rings are red lenslets, while the lenslets of one or more of the central rings are blue lenslets.

Instead of concentric rings of lenslets, the optical lens may comprise concentric rings having a continuous optical power and inducing defocus. The concentric rings of continuous optical power may be spherical, aspherical, or toroidal rings. Further, the concentric rings of continuous optical power may comprise an alternation of red-colored and blue-colored rings with varying power levels.

In an example where the optical design is Stellest-based, the optical lens comprises zones devoid of lenslets, such as a central zone and/or areas between the concentric rings. These zones can be used to create chromatic contrast reduction without inducing defocus, but rather through selective light-scattering in a specific wavelength range.

For instance, the optical lens may comprise a red central zone (filtering blue light).

For instance, the optical lens may comprise a central zone comprising diffractive patterns of chromatic "phase-shift" that do not filter but maintain all the energy transmitted to the eye. These phase-shifts can be optimized for certain wavelengths, for instance, to achieve perfect MTF in red (in focus) and reduced MTF in blue, thus creating contrast reduction similar to chromatic diffusion.

For instance, the optical lens may comprise continuous blue rings alternated with the concentric rings of lenslets, the continuous blue rings being configured to induce no defocus but rather selective light scattering of blue wavelength.

For instance, the optical lens may comprise concentric blue-colored rings of continuous optical power and configured to induce defocus alternated with continuous blue rings (for instance plano) configured to induce no defocus but rather selective light scattering of blue wavelength.

The examples discussed above of optical lenses including at least lenslets and optionally one or more diffusive zones can be provided by a single optical lens surface, for instance a front surface of an optical lens which comprises a plurality of zones, each with its own optical properties.

Alternatively, these examples can be provided by a combination of a plurality of surfaces.

For example, optical lenslets may be encapsulated or provided on the front surface of an optical lens, while chromatic light-scattering elements may be provided on the back surface of the optical lens.

For example, non-chromatic optical lenslets may be provided on the front surface (such as current Stellest or Octopus designs) combined with selective light-scattering elements on the back surface. This could involve using laser-induced chromatic diffusion, coating with chromatic diffusion properties, or phase shift structures creating chromatic contrast reduction, especially in blue.

This solution has the advantage of utilizing existing designs used for non-chromatic solutions, allowing personalization or completion of finished lenses by adding chromatic contrast reduction on the backside.

In an example, patterns may be created on the back surface, such as dots with a center part of one color (red or blue) and an edge (annulus) of another color (blue or red) to alter the spectrum of light passing through the microlenses.

In an example, chromatic light-scattering lenslets may be provided on the front surface (using tints, dyes, etc.) and combined with chromatic light-scattering elements or phase shift contrast reduction on the back surface.

The chromatic light-scattering elements may be arranged in areas of the back surface that align with corresponding areas devoid of lenslets on the front surface and/or in areas of the back surface that align with corresponding areas with lenslets on the front surface.

The chromatic light-scattering elements may be arranged both in areas of the front surface and in areas of the back surface, including:

over the central clear zone, and/or
over areas located between lenslet zones, such as between concentric rings of lenslets, and/or homogeneously over lenslet zones (e.g., by utilizing dyes in the coating and/or nanoparticles, and/or over a peripheral clear zone.

Any manufacturing technique discussed in the present document may be applied, alone or combined, to create areas of an optical lens that are configured to appear red or blue to the wearer while comprising lenslets and/or while comprising chromatic light-scattering elements.

Said manufacturing techniques can be combined to create both types of chromatic structures, either on the same surface or in combination on at least two surfaces.

For instance, inkjet technology allows easily manufacturing colored lenslets.

The chromatic light-scattering elements may be arranged in areas of the back surface for instance by utilizing techniques such as laser coloration or creating black holes with a laser.

The chromatic light-scattering elements may be incorporated into the coating for instance by utilizing monochromatic laser holography.

**Claims**

1. A lens element comprising:

a vision zone; and
within at least part of the vision zone, chromatic light-scattering elements defined as elements configured for selective light scattering in at least one predetermined wavelength range, thereby inducing chromatic contrast reduction across said at least part of the vision zone.

2. The lens element of claim 1,

further comprising a layer extending over the at least part of the vision zone, the layer being infused with nanoparticles, wherein at least part of the chromatic light-scattering elements comprises the nanoparticles.

3. The lens element of claim 1 or 2,

further comprising a layer extending over the at least part of the vision zone, the layer comprising discontinuous, at least partly metallic, islands, and wherein at least part of the chromatic light-scattering elements comprise the islands.

4. The lens element of any one of claims 1 to 3, wherein at least part of the chromatic light-scattering elements comprises elements that induce Rayleigh scattering within the predetermined wavelength range.

5. The lens element of any one of claims 1 to 4, wherein a holographic technique is used to create at least part of the chromatic light-scattering elements.

6. The lens element of any one of claims 1 to 5, wherein the lens element is obtained by molding a substrate and at least part of the chromatic light-scattering elements comprise bubbles integrated into the substrate

7. The lens element of any one of claims 1 to 6,

further comprising a plurality of layers extending over the at least part of the vision zone, at least one layer comprising at least one set of light-scattering elements, at least part of the chromatic light-scattering elements comprising at least one of the sets of light scattering elements.

8. The lens element of any one of claims 1 to 7,

wherein at least part of the chromatic light-scattering elements comprise chromatic elements combined with light-scattering elements, and the chromatic elements include colored ink drops.

9. The lens element of any one of claims 1 to 8, wherein at least part of the chromatic light-scattering elements comprise holes that have a size facilitating a transmission of scattered light in the at least one predetermined wavelength range.

10. The lens element of any one of claims 1 to 9, wherein at least part of the chromatic light-scattering elements are photochromic elements configured to react to light at least in the predetermined wavelength range.

11. The lens element of any one of claims 1 to 10, wherein at least part of the chromatic light-scattering elements comprise:

   light-scattering elements, and
   chromatic elements covering said light-scattering elements, the chromatic elements being configured for selectively absorbing light outside of the at least one predetermined wavelength range.

12. The lens element of claim 11, further comprising:

   a light-scattering layer extending over the at least part of the vision zone and comprising the light-scattering elements, and
   a coating layer extending over at least part of the light-scattering layer,
   wherein the light-scattering elements are encapsulated, and
   wherein the coating layer comprises the chromatic elements.

13. The lens element of any one of claims 1 to 12,

   wherein the lens element further comprises, within at least part of the vision zone, chromatic lenslets configured to induce formation of a chromatically-altered blurred optical image, the chromatically-altered blurred optical image inducing chromatic contrast reduction across said at least part of the vision zone,
   wherein the chromatic lenslets are distinct from the chromatic light-scattering elements.

14. Eyewear comprising a lens element, the lens element comprising a vision zone with dioptric function; and

   within at least part of the vision zone, chromatic light-scattering elements defined as elements configured for selective light scattering in at least one predetermined wavelength range,
   thereby inducing chromatic contrast reduction across said at least part of the vision zone.

15. Head mountable display comprising an lens element, the lens element comprising a vision zone with dioptric function; and

   within at least part of the vision zone, chromatic light-scattering elements defined as elements configured for selective light scattering in at least one predetermined wavelength range,
   thereby inducing chromatic contrast reduction across said at least part of the vision zone.

FIG. 1

FIG. 2

**FIG. 3**

FIG. 4

FIG. 5

**FIG. 6**

**FIG. 7**

**FIG. 8**

**FIG. 9**

**FIG. 10**

**FIG. 11**

$$\sigma_S = Q_S A$$

## FIG. 12

## FIG. 13

**FIG. 14**

**FIG. 15**

FIG. 16

FIG. 17

140      141

# FIG. 18

**FIG. 19**

**FIG. 20**

EP 4 703 787 A1

**FIG. 21**

**FIG. 22**

192
182
191
180

FIG. 23

200

FIG. 24

EP 4 703 787 A1

**FIG. 25**

**FIG. 26**

31

FIG. 27

FIG. 28

FIG. 29

FIG. 30

FIG. 31

FIG. 32

**FIG. 33**

**FIG. 34**

FIG. 35

Application Number

EP 24 30 6416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 884 264 B2 (SIGHTGLASS VISION INC [US]) 5 January 2021 (2021-01-05) | 1,3,5,6, 8-12,14, 15 | INV. G02C7/02 G02C7/10 B29D11/00 |
| Y | * figures 1A, 1B * <br> * column 4, line 45 - line 52 * <br> * column 6, line 64 - column 7, line 5 * <br> * column 7, line 6 - column 8, line 6 * <br> * column 11, line 32 - column 12, line 2 * <br> * column 12, line 42 * <br> * column 13, line 30 - line 42 * <br> * column 20, line 40 - line 47 * <br> ----- | 13 | |
| X | WO 2024/145395 A1 (SIGHTGLASS VISION INC [US]) 4 July 2024 (2024-07-04) | 1,3-5, 7-12,14, 15 | |
| Y | * paragraphs [0007] - [0009], [0051], [0089] - [0096], [0104] - [0107]; figures 1A, 1B * <br> ----- | 13 | |
| A | GARCIA DE ABAJO F J: "Colloquium: Light scattering by particle and hole arrays", ARXIV.ORG, CORNELL UNIVERSITY LIBRARY, 201 OLIN LIBRARY CORNELL UNIVERSITY ITHACA, NY 14853, 10 March 2009 (2009-03-10), XP080314544, DOI: 10.1103/REVMODPHYS.79.1267 * the whole document * <br> ----- | 9 | **TECHNICAL FIELDS SEARCHED (IPC)** <br> G02C <br> B29D |
| A | US 2003/116747 A1 (LEM KWOK-WAI [US] ET AL) 26 June 2003 (2003-06-26) * paragraphs [0097], [0098] * <br> ----- | 10 | |

-/--

The present search report has been drawn up for all claims

| Place of search | Date of completion of the search | Examiner |
|---|---|---|
| Munich | 13 February 2025 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 30 6416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/155913 A1 (HOYA OPTICAL LABS OF AMERICA INC [US]) 25 July 2024 (2024-07-25) | 1-4, 8-10,14, 15 | |
| Y | * paragraphs [0003], [0004], [0009], [0018] - [0022], [0034], [0037], [0038]; figures 1B, 4 * * paragraphs [0041], [0045] - [0049], [0053] * | 13 | |
| | ----- | | |
| X | US 2023/273352 A1 (CANO JEAN-PAUL [FR] ET AL) 31 August 2023 (2023-08-31) | 1,6,14, 15 | |
| A | * paragraphs [0004], [0005], [0020], [0028], [0059] - [0065], [0086] - [0089] * * paragraphs [0214], [0246] * | 2-5,7-13 | |
| | ----- | | |
| Y | CN 217 425 856 U (ZHUHAI FEITELAN MEDICAL TECH CO LTD) 13 September 2022 (2022-09-13) | 13 | |
| A | * Pages 2, 3 and 6 of the attached machine translation; figure 7 * | 1-12,14, 15 | TECHNICAL FIELDS SEARCHED (IPC) |
| | ----- | | |
| A | US 2016/306078 A1 (BOYD CLARK D [US] ET AL) 20 October 2016 (2016-10-20) * paragraphs [0078] - [0081] * | 3 | |
| | ----- | | |

The present search report has been drawn up for all claims

| Place of search | Date of completion of the search | Examiner |
|---|---|---|
| Munich | 13 February 2025 | Vazquez Martinez, D |

EPO FORM 1503 03.82 (P04C01)

## ANNEX TO THE EUROPEAN SEARCH REPORT
## ON EUROPEAN PATENT APPLICATION NO.

EP 24 30 6416

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | | Publication date | Patent family member(s) | | Publication date |
|---|---|---|---|---|---|
| US 10884264 | B2 | 05-01-2021 | CN | 112384171 A | 19-02-2021 |
| | | | EP | 3746001 A1 | 09-12-2020 |
| | | | JP | 7358364 B2 | 10-10-2023 |
| | | | JP | 2021513676 A | 27-05-2021 |
| | | | JP | 2023178303 A | 14-12-2023 |
| | | | TW | 201938103 A | 01-10-2019 |
| | | | TW | 202116264 A | 01-05-2021 |
| | | | US | 2019235279 A1 | 01-08-2019 |
| | | | US | 2021165244 A1 | 03-06-2021 |
| | | | US | 2024192522 A1 | 13-06-2024 |
| | | | WO | 2019152438 A1 | 08-08-2019 |
| WO 2024145395 | A1 | 04-07-2024 | TW | 202429162 A | 16-07-2024 |
| | | | WO | 2024145395 A1 | 04-07-2024 |
| US 2003116747 | A1 | 26-06-2003 | AU | 2002360524 A1 | 09-07-2003 |
| | | | CN | 1708363 A | 14-12-2005 |
| | | | JP | 2005516235 A | 02-06-2005 |
| | | | KR | 20040076263 A | 31-08-2004 |
| | | | US | 2003116747 A1 | 26-06-2003 |
| | | | WO | 03053593 A2 | 03-07-2003 |
| WO 2024155913 | A1 | 25-07-2024 | NONE | | |
| US 2023273352 | A1 | 31-08-2023 | AU | 2021325316 A1 | 02-03-2023 |
| | | | BR | 112023001355 A2 | 23-02-2023 |
| | | | CN | 116097131 A | 09-05-2023 |
| | | | EP | 4193200 A1 | 14-06-2023 |
| | | | KR | 20230046299 A | 05-04-2023 |
| | | | US | 2023273352 A1 | 31-08-2023 |
| | | | WO | 2022033929 A1 | 17-02-2022 |
| CN 217425856 | U | 13-09-2022 | NONE | | |
| US 2016306078 | A1 | 20-10-2016 | AU | 2016250171 A1 | 16-11-2017 |
| | | | AU | 2016250172 A1 | 16-11-2017 |
| | | | AU | 2019202892 A1 | 16-05-2019 |
| | | | AU | 2019204242 A1 | 01-08-2019 |
| | | | AU | 2021204738 A1 | 05-08-2021 |
| | | | AU | 2021229230 A1 | 07-10-2021 |
| | | | AU | 2023285273 A1 | 18-01-2024 |
| | | | AU | 2024201218 A1 | 14-03-2024 |
| | | | CA | 2982761 A1 | 20-10-2016 |
| | | | CA | 2982762 A1 | 20-10-2016 |
| | | | CN | 107710057 A | 16-02-2018 |
| | | | CN | 107924955 A | 17-04-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 6416

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | | Publication date |
|---|---|---|---|---|
| | | CN | 113934019 A | 14-01-2022 |
| | | EP | 3283919 A1 | 21-02-2018 |
| | | EP | 3284108 A1 | 21-02-2018 |
| | | EP | 4235806 A2 | 30-08-2023 |
| | | IL | 254961 A | 07-02-2019 |
| | | IL | 300963 A | 01-04-2023 |
| | | IL | 303695 A | 01-08-2023 |
| | | JP | 6741751 B2 | 19-08-2020 |
| | | JP | 6941091 B2 | 29-09-2021 |
| | | JP | 7099740 B2 | 12-07-2022 |
| | | JP | 7296648 B2 | 23-06-2023 |
| | | JP | 7489123 B2 | 23-05-2024 |
| | | JP | 7495144 B2 | 04-06-2024 |
| | | JP | 2018517184 A | 28-06-2018 |
| | | JP | 2018517945 A | 05-07-2018 |
| | | JP | 2020197726 A | 10-12-2020 |
| | | JP | 2021182153 A | 25-11-2021 |
| | | JP | 2022091950 A | 21-06-2022 |
| | | JP | 2022137103 A | 21-09-2022 |
| | | JP | 2023116584 A | 22-08-2023 |
| | | JP | 2024105410 A | 06-08-2024 |
| | | JP | 2024112892 A | 21-08-2024 |
| | | US | 2016306078 A1 | 20-10-2016 |
| | | US | 2016306080 A1 | 20-10-2016 |
| | | US | 2016306254 A1 | 20-10-2016 |
| | | US | 2016306255 A1 | 20-10-2016 |
| | | US | 2017336540 A1 | 23-11-2017 |
| | | US | 2017336541 A1 | 23-11-2017 |
| | | US | 2019331834 A1 | 31-10-2019 |
| | | US | 2019331835 A1 | 31-10-2019 |
| | | US | 2021086481 A1 | 25-03-2021 |
| | | US | 2022242094 A1 | 04-08-2022 |
| | | US | 2022305759 A1 | 29-09-2022 |
| | | US | 2024217213 A1 | 04-07-2024 |
| | | US | 2024246320 A1 | 25-07-2024 |

EPO FORM P0459

For more details about this annex : see Official Journal of the European Patent Office, No. 12/82

page 2 of 2